(19) **Europäisches Patentamt**
**European Patent Office**
**Office européen des brevets**

(11) **EP 3 046 076 B1**

(12) **EUROPÄISCHE PATENTSCHRIFT**

(45) Veröffentlichungstag und Bekanntmachung des Hinweises auf die Patenterteilung:
**14.03.2018  Patentblatt 2018/11**

(51) Int Cl.:
***G06T 7/80*** *(2017.01)*

(21) Anmeldenummer: **15151429.6**

(22) Anmeldetag: **16.01.2015**

(54) **Verfahren zum Kalibrieren einer Bilderfassungseinrichtung**

Method for calibrating an image capturing device

Procédé destiné à étalonner un dispositif de détection d'image

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.07.2016  Patentblatt 2016/29**

(73) Patentinhaber: **Delphi Technologies, Inc.**
**Troy, MI 48007 (US)**

(72) Erfinder: **Neisius, Dr. Diane**
**50968 Köln (DE)**

(74) Vertreter: **Robert, Vincent et al**
**Delphi France SAS**
**Bâtiment Le Raspail - Paris Nord 2**
**22, avenue des Nations**
**CS 65059 Villepinte**
**95972 Roissy CDG Cedex (FR)**

(56) Entgegenhaltungen:
WO-A1-2014/021421     DE-T5-112009 001 197
US-B2- 8 269 833

• **DE PAULA M B ET AL: "Automatic on-the-fly extrinsic camera calibration of onboard vehicular cameras", EXPERT SYSTEMS WITH APPLICATIONS, Bd. 41, Nr. 4, März 2014 (2014-03), Seiten 1997-2007, XP028777376, ISSN: 0957-4174, DOI: 10.1016/J.ESWA.2013.08.096**

**Beschreibung**

Die vorliegende Erfindung betrifft ein Verfahren zum Kalibrieren einer Bilderfassungseinrichtung, die in einer Montagehöhe über der Fahrbahnebene an einem Kraftfahrzeug angeordnet ist und in der Lage ist, in zeitlichen Abständen Bilder einer Umgebung des Kraftfahrzeugs zu erfassen.

Bilderfassungseinrichtungen, wie zum Beispiel digitale Kameras, werden in modernen Kraftfahrzeugen als Eingabesensoren für verschiedene Arten von Fahrerassistenzsystemen verwendet, beispielsweise für Spurhalteassistenten, Spurhalteunterstützungssysteme, Fahrzeug- und Fußgängererkennungssysteme sowie Systeme zur automatischen Verkehrszeichenerkennung oder zur automatischen Leuchtweitenregulierung. Bei derartigen Anwendungen ist es allgemein erforderlich, die Position der interessierenden Objekte in Weltkoordinaten anhand der Position von erkannten Bildobjekten in Bildkoordinaten zu ermitteln. Für diese Umrechnung zwischen Bildkoordinaten und Weltkoordinaten ist eine Kalibrierung der Bilderfassungseinrichtung notwendig. Im Rahmen einer solchen Kalibrierung werden insbesondere die Position und die Ausrichtung der Kamera relativ zu dem zugehörigen Kraftfahrzeug ermittelt. Ein wichtiger Kalibrierungs-Parameter ist der Neigungswinkel oder Nickwinkel der Kamera. Dieser kann beispielsweise mittels Zusatzsensoren ermittelt werden. Um den hiermit verbundenen hohen Aufwand zu vermeiden, kann der Neigungswinkel auch anhand von in den erfassten Bildern erkannten Objekten geschätzt werden, beispielsweise durch Schätzen der Position des Fluchtpunkts im Bild. Ein derartiges Verfahren ist in der EP 2 704 096 A1 offenbart.

Ein Schätzen der Position des Fluchtpunkts im Bild ermöglicht im Allgemeinen keinen Rückschluss auf die Montagehöhe, welche jedoch für einen Kalibrierungsvorgang ebenfalls benötigt wird. Bei Fahrerassistenzsystemen für Personenkraftwagen ist dies im Allgemeinen nicht problematisch, da hier üblicherweise die Montagehöhe für alle Fahrzeuge einer Serie gleich ist und der Wert für die Montagehöhe bei der Kalibrierung somit als Konstante vorgegeben werden kann.

Insbesondere bei Fahrerassistenzsystemen für Lastkraftwagen ist es jedoch nicht angemessen, von einer konstanten Montagehöhe der Bilderfassungseinrichtung auszugehen. Lastkraftwagen werden nämlich üblicherweise unter individueller Zusammenstellung modulartiger Komponenten wie Grundrahmen, Radaufhängung, Führerhaus und Transportaufbau in zahlreichen unterschiedlichen Varianten hergestellt. Es ergeben sich somit je nach Variante unterschiedliche Montagehöhen für die Kamera. Ein weiteres Problem besteht darin, dass viele Lastkraftwagen mit Luftfederungssystemen ausgestattet sind. Derartige Luftfederungen können einen beträchtlichen Hub aufweisen und die Montagehöhe dynamisch verändern. Zusätzlich variiert die Montagehöhe auch mit der Beladung eines Lastwagens. Kamera-Kalibrierungsverfahren, welche von einer konstanten Montagehöhe ausgehen, können somit zu einer Leistungsminderung und sogar zu einer Fehlfunktion des zugehörigen Fahrerassistenzsystems führen.

Die US 8 269 833 B2 offenbart ein kamerabasiertes Verfahren zur Ermittlung der Geschwindigkeit eines Fahrzeugs, bei welchem fortlaufend der Blickwinkel der Kamera relativ zum Boden sowie die Höhe der Kamera über dem Boden gemessen werden.

In der WO 2014/021421 A1 ist ein Navigationssystem für ein Kraftfahrzeug offenbart, bei welchem mittels einer Kamera Bilder der Fahrzeugumgebung aufgenommen werden und Parameter der Kamera anhand von Zusatzinformationen korrigiert werden.

Der Aufsatz "Automatic on-the-fly extrinsic camera calibration of onboard vehicular cameras", EXPERT SYSTEMS WITH APPLICATIONS, Bd. 41, Nr. 4, Seiten 1997-2007, XP028777376, ISSN:0957-4174, offenbart ein Verfahren zum Kalibrieren einer Kamera, bei dem die Höhe der Kamera über dem Boden anhand des Abstands zwischen zwei benachbarten Fahrbahnmarkierungsstücken ermittelt wird.

Es ist eine Aufgabe der Erfindung, mit einfachen Mitteln eine zuverlässige Kalibrierung von an Kraftfahrzeugen angeordneten Bilderfassungseinrichtungen zu ermöglichen, welche die Montagehöhe der Bilderfassungseinrichtung einschließt.

Die Lösung der Aufgabe erfolgt durch ein Verfahren zum Kalibrieren einer Bilderfassungseinrichtung mit den Merkmalen des Anspruchs 1.

Erfindungsgemäß wird ein vorläufiger Wert der Montagehöhe angenommen. Ferner wird wenigstens eine in der Fahrbahnebene liegende Messstrecke mit einer definierten Streckenlänge definiert. Die Messstrecke wird mittels einer perspektivischen Projektion unter Verwendung des vorläufigen Werts der Montagehöhe in die Bildebene der Bilderfassungseinrichtung projiziert, um zwei Messpositionen im Bild zu ermitteln, die einem Streckenanfang und einem Streckenende der Messstrecke entsprechen. Mittels eines Bildverarbeitungssystems wird in nacheinander erfassten Bildern wenigstens ein Objekt identifiziert, das sich zu verschiedenen Zeitpunkten an den zwei Messpositionen befindet. Aus der Zeitdifferenz zwischen den verschiedenen Zeitpunkten und der aktuellen Geschwindigkeit des Kraftfahrzeugs wird eine berechnete Streckenlänge der Messstrecke ermittelt. Anhand eines Vergleichs der definierten Streckenlänge mit der berechneten Streckenlänge wird dann ein tatsächlicher Wert der Montagehöhe aus dem vorläufigen Wert der Montagehöhe ermittelt. Die Bilderfassungseinrichtung wird unter Verwendung des tatsächlichen Werts der Montagehöhe kalibriert.

Erfindungsgemäß wird also die Ermittlung der Montagehöhe auf eine Längenmessung in der Fahrbahnebene in Weltkoordinaten zurückgeführt. Eine Längenmessung in Weltkoordinaten hat den Vorteil, dass das Ergebnis nicht durch die Ausrichtung der Kamera beeinflusst wird. Die Erfindung beruht unter anderem auf der Erkenntnis, dass bei einer perspektivischen Projektion zwischen Fahrbahnebene und Bildebene der Zusammenhang zwischen Weltkoordinaten und Bildkoordinaten linear bezüglich der Montagehöhe ist. Somit kann aus einem Vergleich einer in der Welt definierten und ins Bild projizierten Strecke mit derjenigen (berechneten) Strecke, welche von einem im Bild erkennbaren Bezugsobjekt beim Durchlaufen der projizierten Strecke tatsächlich in der Welt zurückgelegt wird, unmittelbar die Abweichung des vorläufigen Werts der Montagehöhe vom tatsächlichen Wert der Montagehöhe ermittelt werden. Die Erfindung sieht vor, das Kalibrierungsverfahren mit einem im Prinzip beliebigen Anfangswert für die Montagehöhe zu beginnen und diesen Wert dann im Rahmen des Verfahrens zu berichtigen. Um eine hohe Robustheit des Verfahrens zu erzielen, ist es bevorzugt, als vorläufigen Wert der Montagehöhe einen "wahrscheinlichen" oder "erwarteten" Wert zu verwenden.

Damit ist ein solcher Wert gemeint, der innerhalb eines Bereichs möglicher tatsächlicher Werte der Montagehöhe liegt. Es hat sich herausgestellt, dass mittels eines erfindungsgemäßen Verfahrens eine besonders präzise und numerisch stabile Höhenkalibrierung von Fahrzeug-Kameras möglich ist. Da das erfindungsgemäße Verfahren für einen relativ weiten Bereich von Montagehöhen funktioniert, kann es nicht nur für Fahrerassistenzsysteme von Personenkraftwagen, sondern auch für Fahrerassistenzsysteme von Lastkraftwagen eingesetzt werden.

Weiterbildungen der Erfindung sind in den abhängigen Ansprüchen, der Beschreibung sowie der beigefügten Zeichnung angegeben.

Vorzugsweise wird der tatsächliche Wert der Montagehöhe durch eine Multiplikation des vorläufigen Werts der Montagehöhe mit dem Verhältnis aus der definierten Streckenlänge und der berechneten Streckenlänge der Messstrecke bestimmt. Dies ergibt sich aus dem Strahlensatz bei Betrachtung derjenigen Sichtstrahlen, die dem Streckenanfang und dem Streckenende der Messstrecke zugeordnet sind. Es ist also bevorzugt, die Anpassung des vorläufigen Werts der Montagehöhe unter Verwendung des Strahlensatzes durchzuführen. Ein besonderer Vorteil besteht hierbei in der Einfachheit der Berechnung.

Das Projizieren der definierten Messstrecke in die Bildebene der Bilderfassungseinrichtung kann mittels eines "inverse perspective mapping"-Algorithmus durchgeführt werden. Insbesondere kann ein Lochkameramodell zur Festlegung der Projektionsgleichung herangezogen werden. Derartige Verfahren können in vorteilhafter Weise dazu verwendet werden, eine in Weltkoordinaten definierte Messstrecke in Bildkoordinaten umzurechnen. Ein "inverse perspektive mapping"-Algorithmus ist beispielsweise in dem Aufsatz "Inverse Perspective Mapping Simplifies Optical Flow Computation and Obstacle Detection" von Mallot et al., Biological Cybernetics 64(1991), Seiten 177-185 beschrieben.

Vorzugsweise wird eine Messstrecke definiert, die sich zumindest im Wesentlichen parallel zu einer Fahrtrichtung des Kraftfahrzeugs erstreckt. Daraus resultiert eine relativ einfache Berechnung. Insbesondere ist auf diese Weise gewährleistet, dass die Zeitdifferenz direkt und unmittelbar mit der Streckenlänge korreliert.

Eine Ausführungsform der Erfindung sieht vor, dass als Messpositionen Abtastlinien ermittelt werden, die sich, bevorzugt horizontal, durch das gesamte Bild hindurch erstrecken, und dass das Identifizieren wenigstens eines Objekts jeweils das Anwenden eines Objekterkennungskriteriums auf alle einer Abtastlinie zugeordneten Bildpunkte umfasst. Jedes Objekt, welches das Objekterkennungskriterium erfüllt und die Abtastlinien passiert, wird somit zuverlässig erkannt.

Zum Identifizieren eines Objekts an einer Messposition kann geprüft werden, ob an der betreffenden Messposition bei Betrachtung mehrerer nacheinander erfasster Bilder ein Helligkeitssprung auftritt. Dies ermöglicht eine besonders einfache Objektidentifizierung. Helligkeitssprünge treten beispielsweise am Anfang und am Ende einer Fahrbahnmarkierung und insbesondere wiederkehrend bei unterbrochenen Fahrbahnmarkierungen auf. Das Detektieren solcher Helligkeitssprünge kann relativ schnell und einfach erfolgen. Es kann zum Beispiel anhand einer Schwellenwert-basierten Filterung durchgeführt werden.

Eine Ausführungsform der Erfindung sieht vor, dass das Identifizieren eines Objekts an einer Messposition anhand eines Ausgabesignals eines der Bilderfassungseinrichtung zugeordneten separaten Objekterkennungssystems, insbesondere eines Klassifizierers, durchgeführt wird. Durch Nutzung der externen Klassifizierungsergebnisse kann der Aufwand für die Objekterkennung im Rahmen des Kalibrierungsverfahrens reduziert werden. Wenn bereits erkannte Fahrbahnmarkierungen als Objekte für die Längenmessung verwendet werden, ist sichergestellt, dass die Messung in der Fahrbahnebene erfolgt.

Eine spezielle Ausgestaltung der Erfindung sieht vor, dass eine vordere und/oder eine hintere Markierungskante einer unterbrochenen Fahrspurmarkierung identifiziert wird. Dies ist insofern vorteilhaft, als einerseits die bei Markierungskanten vorhandenen Helligkeitssprünge leicht erkennbar sind und andererseits unterbrochene Fahrspurmarkierungen in den meisten Verkehrssituationen im Bild vorhanden sind.

Eine weitere Ausführungsform der Erfindung sieht vor, dass für jede der ermittelten Messpositionen unter Verwendung einer Reihe von aufeinanderfolgend erfassten Bildern ein zeitliches, das heißt von der Zeit abhängendes, Helligkeitssignal gebildet und durch eine Koordinatentransformation, vorzugsweise unter Integration der Geschwindigkeit des Kraftfahrzeugs, in ein räumliches, das heißt von der Position in der Welt abhängendes, Helligkeitssignal umgewandelt wird. Die Integration kann insbesondere mittels eines numerischen Integrationsverfahrens durchgeführt werden. Um den Rechenaufwand gering zu halten, kann beispielsweise die Trapezregel angewandt werden. Räumliche Helligkeitssignale können direkt in Bezug auf Objektpositionen, Abstände und dergleichen analysiert werden.

Gemäß einer weiteren Ausführungsform der Erfindung werden die räumlichen Helligkeitssignale der zwei Messpositionen mittels Autokorrelation miteinander verglichen, um den räumlichen Abstand zwischen korrespondierenden Stellen der zwei räumlichen Helligkeitssignale als berechnete Streckenlänge der Messstrecke zu bestimmen. Dies trägt dem Umstand Rechnung, dass die Helligkeitssignale im Allgemeinen verrauscht und fehlerbehaftet sind. Eine Autokorrelation zweier räumlicher Helligkeitssignale ermöglicht eine Unterdrückung solcher Störquellen und somit eine besonders robuste Ermittlung der Streckenlänge.

Eine weitere Ausführungsform der Erfindung sieht vor, dass mehrere, insbesondere mehr als fünf, Messstrecken definiert werden, wobei für alle Messstrecken jeweilige berechnete Streckenlängen ermittelt werden, insbesondere wobei die entsprechenden Ergebnisse vor dem Kalibrieren gefiltert werden. Auf diese Weise werden Störungen herausgemittelt, sodass die Stabilität des Verfahrens besonders hoch ist.

Der vorläufige Wert der Montagehöhe kann anhand von A-priori-Informationen und insbesondere in Abhängigkeit von einem Typ des Kraftfahrzeugs vorgegeben werden. Im Allgemeinen kann ausgehend von dem bekannten Typ des Kraftfahrzeugs, für welchen das betreffende Fahrerassistenzsystem vorgesehen ist, ein Ausgangswert für die Montagehöhe angegeben werden, welcher für die Gewährleistung der Stabilität des Verfahrens ausreichend genau ist.

Gemäß einer weiteren Ausführungsform der Erfindung wird das Kalibrieren der Bilderfassungseinrichtung erst dann durchgeführt, wenn die aktuelle Geschwindigkeit des Kraftfahrzeugs einen Schwellenwert überschreitet und/oder die aktuelle Gierrate des Kraftfahrzeugs einen Schwellenwert unterschreitet und/oder ein geschätzter Fehler des tatsächlichen Werts der Montagehöhe einen vorgegebenen Fehler-Schwellenwert unterschreitet. Auf diese Weise ist ausgeschlossen, dass fehlerhafte Berechnungsergebnisse zur Kalibrierung herangezogen werden. Bei Bedarf kann der Fahrer des Kraftfahrzeugs über das Vorliegen von Fehlern informiert werden, so dass er gegebenenfalls geeignete Maßnahmen ergreifen kann.

Die Erfindung betrifft auch eine Vorrichtung zum Erkennen und Verfolgen eines Objekts von einem Kraftfahrzeug aus, mit einer Bilderfassungseinrichtung, welche in einer vorgegebenen Montagehöhe über der Fahrbahnebene an dem Kraftfahrzeug angeordnet ist und welche zum Aufnehmen von Bildern der Fahrzeugumgebung in zeitlichen Abständen ausgebildet ist, und mit einem Bildverarbeitungssystem, das zum Durchführen eines Verfahrens wie vorstehend beschrieben ausgebildet ist.

Weiterhin betrifft die Erfindung ein Computerprogrammprodukt, das Programmanweisungen enthält, die ein Verfahren wie vorstehend beschrieben ausführen, wenn das Computerprogramm auf einem Computer ausgeführt wird.

Die Erfindung wird nachfolgend beispielhaft unter Bezugnahme auf die beigefügten Zeichnungen beschrieben.

Fig. 1   zeigt in schematischer Form zwei Lastkraftwagen mit unterschiedlichen Führerhäusern, in denen jeweils eine Bilderfassungseinrichtung montiert ist.

Fig. 2   zeigt die Projektion einer Weltebene auf eine Bildebene in einem Lochkameramodell.

Fig. 3   zeigt den Zusammenhang zwischen der Streckenlänge einer Messstrecke und der Montagehöhe einer Bilderfassungseinrichtung.

Fig. 4   ist ein Flussdiagramm, das die Anfangssequenz eines erfindungsgemäßen Kalibrierungsverfahrens darstellt.

Fig. 5   ist ein Flussdiagramm, das die Hauptschleife eines erfindungsgemäßen Kalibrierungsverfahrens darstellt.

Fig. 6   zeigt die Projektion von Messstrecken ins Bild anhand eines Lochkameramodells.

Fig. 7   zeigt Testergebnisse eines erfindungsgemäßen Kalibrierungsverfahrens für den Anwendungsfall "Personenkraftwagen".

Fig. 8   zeigt Testergebnisse eines erfindungsgemäßen Kalibrierungsverfahrens für den Anwendungsfall "Lastkraftwagen".

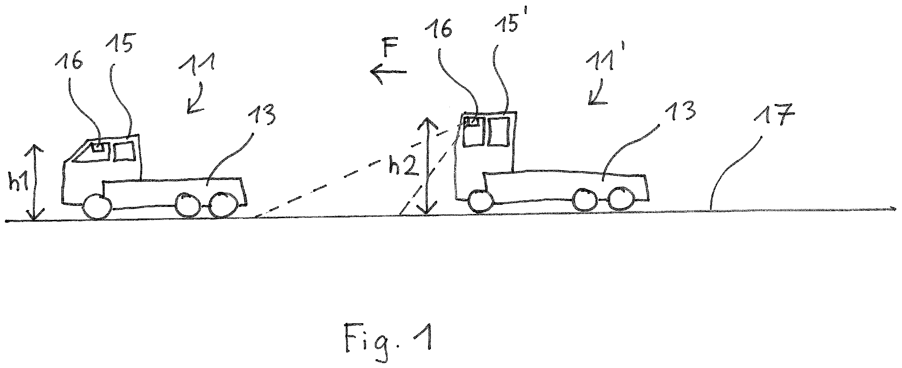

Fig. 1 zeigt in schematischer Form zwei Lastwagen 11, 11', die jeweils ein Fahrgestell 13 sowie ein Führerhaus 15, 15' aufweisen. Während das Fahrgestell 13 für beide Lastwagen 11, 11' gleich ausgeführt ist, unterscheiden sich die Führerhäuser 15, 15' - unter anderem in Bezug auf ihre Höhe. In jedem Führerhaus 15, 15' ist eine Bilderfassungseinrichtung in Form einer digitalen Kamera 16 angebracht, welche in der Lage ist, zeitlich nacheinander Bilder eines vor dem jeweiligen Lastwagen 11, 11' befindlichen Verkehrsraums und insbesondere eines Bereichs der Fahrbahnebene 17 zu erfassen, wie anhand des im Bild hinteren Lastwagens 11' durch gestrichelte Randstrahlen gezeigt ist. Die Kameras 16 sind jeweils mit nachgeordneten, in Fig. 1 nicht dargestellten Bildverarbeitungseinrichtungen gekoppelt und bilden mit diesen zusammen jeweilige Bildverarbeitungssysteme.

Jede der Kameras 16 einschließlich der zugehörigen Bildverarbeitungseinrichtung ist einem oder mehreren Fahrerassistenzsystemen zugeordnet, beispielsweise einem Spurhalteassistent. Aufgrund der unterschiedlichen Ausgestaltung der beiden Führerhäuser 15, 15' sind die Kameras 16 der beiden Lastwagen 11, 11' in unterschiedlichen Montagehöhen h1, h2 über der Fahrbahnebene 17 angeordnet. Das bedeutet, dass die Montagehöhe einer Kamera 16 normalerweise nicht im Voraus bekannt ist, sodass bei einem Kalibrierungsvorgang nicht nur die Winkelausrichtung der Kamera 16, sondern auch deren Montagehöhe zu ermitteln ist.

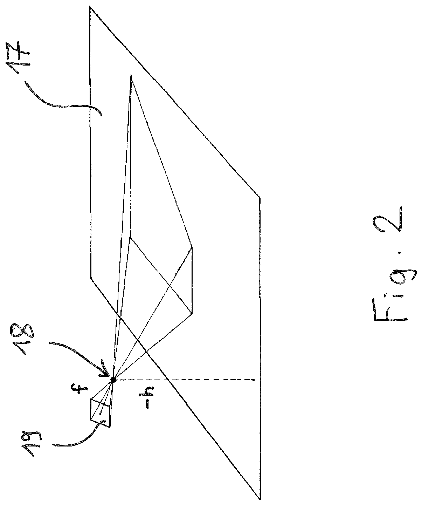

Dies erfolgt erfindungsgemäß unter Verwendung eines "inverse perspective mapping"-Algorithmus. Ein solcher Algorithmus ist zum Beispiel in dem vorstehend bereits genannten Aufsatz "Inverse Perspective Mapping Simplifies Optical Flow Computation and Obstacle Detection" von Mallot et al., Biological Cybernetics 64(1991), Seiten 177-185 offenbart. Der Algorithmus beruht auf einem Lochkameramodell, wie es in Fig. 2 dargestellt ist. Der Ursprung 18 des Lochkameramodells entspricht üblicherweise dem Zentrum des Kameraobjektivs und befindet sich in einer Höhe $h$ über der Fahrbahnebene 17, welche der Montagehöhe entspricht. Im Abstand $f$ hinter dem Ursprung 18 befindet sich die Bildebene 19. Bei der Projektion der Fahrbahnebene 17 auf die Bildebene 19 verlaufen alle Sichtstrahlen durch den Ursprung 18. Es kann gezeigt werden, dass bei einer perspektivischen Projektion anhand eines wie in Fig. 2 dargestellten Lochkameramodells die Bildkoordinaten $(x_I, y_I)$ eines in Weltkoordinaten $(x_W, y_W)$ festen Szenepunkts linear von der Montagehöhe h abhängen. Speziell gilt:

$$(x_W, y_W) = -h(q_{31}x_I + q_{32}y_I - q_{33}f)(q_{11}x_I + q_{12}y_I - q_{13}f, q_{11}x_I + q_{12}y_I - q_{13}f) \quad (1)$$

Hierbei bezeichnen $q_{ij}$ die Matrixelemente der Projektionsmatrix. Das heißt die erwähnte Linearität gilt komponentenweise. Das Verhältnis der Länge einer in der Welt vorgegebenen Strecke zu der durch Vermessung im Bild ermittelten Länge hängt also linear von der Montagehöhe $h$ ab.

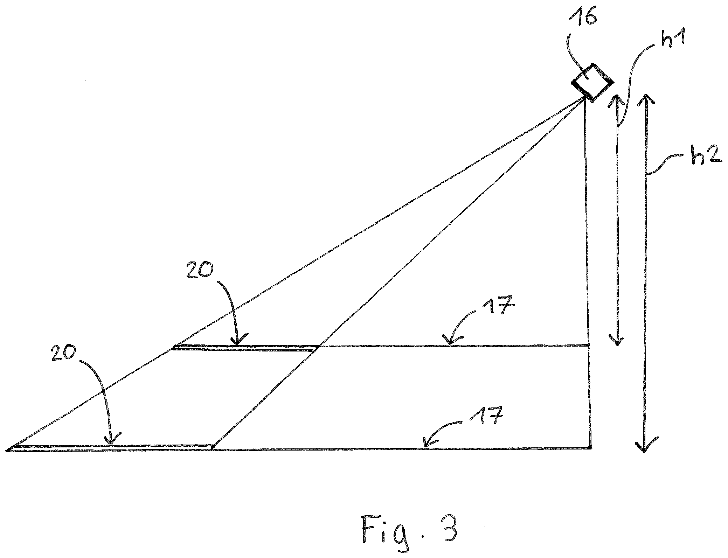

Wenn also bei unterschiedlichen Montagehöhen bildbasierte Längenmessungen durchgeführt werden, dann hängt der jeweils gemessene Abstand zwischen zwei auf der Fahrbahnebene 17 liegenden Punkte linear von der Höhendifferenz ab. Dies geht unmittelbar aus dem Strahlensatz hervor. In Fig. 3 ist dieser Zusammenhang veranschaulicht.

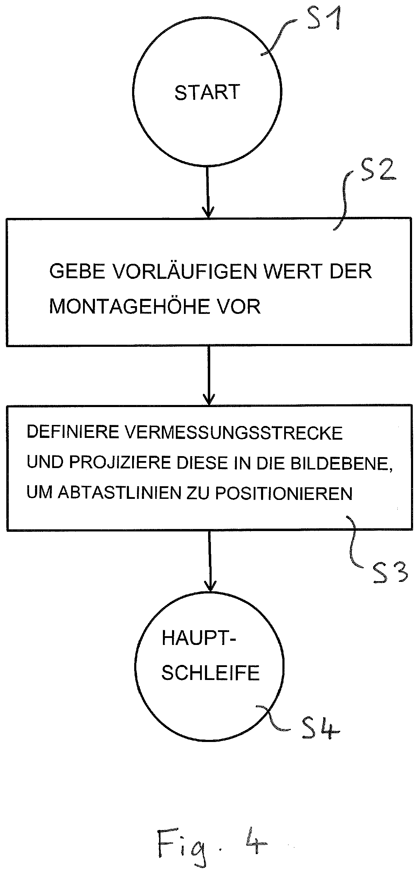

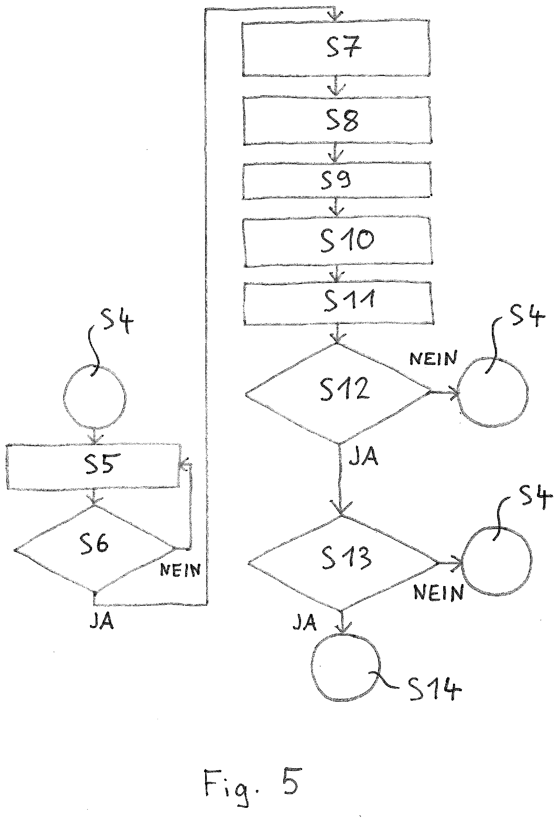

Die vorstehend angegebenen Zusammenhänge werden erfindungsgemäß zum Kalibrieren der Kamera 16 eines Lastwagens 11, 11' (Fig. 1) bei unbekannter Montagehöhe genutzt. Die Schritte eines entsprechenden erfindungsgemäßen Kalibrierverfahrens sind in Fig. 4 und 5 dargestellt. Vor dem Beginn des Verfahrens wird der Neigungswinkel der Kamera 16, welchen die optische Achse der Kamera 16 mit der Horizontlinie einschließt, anhand von erfassten Bildern und in diesen erkannten Objekten ermittelt, beispielsweise durch Ermittlung der Position des Fluchtpunkts wie in der EP 2 704 096 A1 beschrieben. Mittels geeigneter, grundsätzlich bekannter Sensoren werden außerdem die aktuelle Geschwindigkeit und die aktuelle Gierrate des Lastwagens 11, 11' sowie gegebenenfalls der Rollwinkel der Kamera 16 ermittelt.

Wie in Fig. 4 gezeigt wird das Kalibrierverfahren in Schritt S1 gestartet. Anschließend wird in Schritt S2 ein vorläufiger Wert der Montagehöhe h angenommen. Dies kann anhand von A-priori-Informationen erfolgen, indem beispielsweise für jeden Typ von Lastwagen 11, 11', für welchen das betreffende Fahrerassistenzsystem vorgesehen ist, ein spezieller Basiswert oder Durchschnittswert gewählt wird.

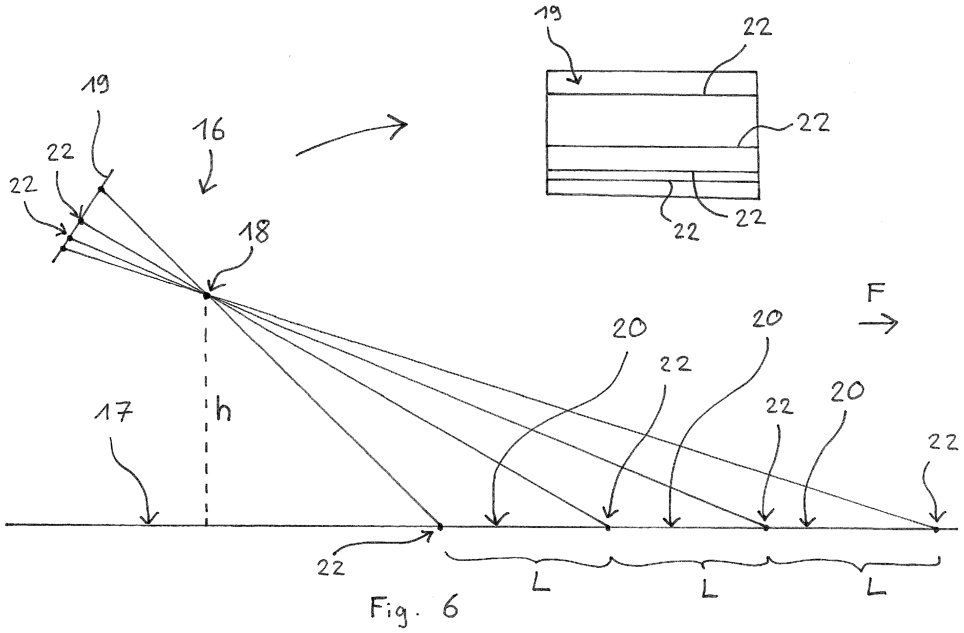

Es werden dann in Schritt S3 mehrere auf der Fahrbahnebene 17 befindliche Messstrecken 20 mit definierter Streckenlänge L definiert, wie in Fig. 6 veranschaulicht ist. Beispielsweise kann ein von der Kamera 16 beobachteter Bereich der Fahrbahnebene 17 entlang der Fahrtrichtung F in zehn bis zwanzig gleich große Abschnitte von 2 m bis 10 m unterteilt werden. Für diese Unterteilung werden Abtastlinien 22 in Weltkoordinaten festgelegt, die sich rechtwinklig zu der Fahrtrichtung F erstrecken. Mittels des "inverse perspective mapping"-Algorithmus werden die festgelegten Abtastlinien 22 in die Bildebene 19 der Kamera 16 projiziert, wie dies im oberen rechten Bereich von Fig. 6 dargestellt ist. Durch die Abtastlinien 22 sind Messpositionen festgelegt, die jeweils einem Streckenanfang und einem Streckenende einer Messstrecke 20 entsprechen. Es versteht sich, dass zum Anwenden des Projektionsalgorithmus der Wert für die Montagehöhe h der Kamera 16 bekannt sein muss. Da die tatsächliche Montagehöhe noch unbekannt ist, wird der perspektivischen Projektion in Schritt S3 der angenommene vorläufige Wert der Montagehöhe zugrunde gelegt.

Im Schritt S4 beginnt dann die Hauptschleife des Verfahrens, deren Schritte in Fig. 5 gezeigt sind. In Schritt S5 wird ein aktuelles Bild erfasst und die aktuelle Geschwindigkeit des Lastwagens 11, 11' ermittelt. Bei Schritt S6 wird geprüft, ob die aktuelle Geschwindigkeit einen Schwellenwert übersteigt. Wenn dies nicht der Fall ist, springt das Verfahren zu Schritt S5 zurück. Wenn die aktuelle Geschwindigkeit des Lastwagens 11, 11' den Schwellenwert überschreitet, wird in Schritt S7 ein Objekt identifiziert. Dieser Schritt umfasst das Anwenden eines Objekterkennungskriteriums auf alle der betreffenden Abtastlinie 22 zugeordneten Bildpunkte. Beispielsweise kann geprüft werden, ob an einer beliebigen Position einer Abtastlinie 22 bei Betrachtung mehrerer nacheinander erfasster Bilder ein Helligkeitssprung auftritt, welcher der Markierungskante einer Fahrspurmarkierung zuzuordnen ist. Bedarfsweise kann das Ausgabesignal eines der Kamera 16 zugeordneten separaten Objekterkennungssystems, insbesondere eines Klassifizierers, genutzt werden. Auf diese Weise werden zeitliche Helligkeitssignale gebildet. Diese zeitlichen Helligkeitssignale werden anschließend in räumliche Helligkeitssignale umgewandelt, das heißt es wird eine eindimensionale Koordinatentransformation $t \leftrightarrow x$ durchgeführt. Hierfür wird die Geschwindigkeit des Lastwagens 11, 11' über die Zeit integriert. Die Integration kann numerisch unter Anwendung der Trapezregel erfolgen:

$$\Delta x = \int_a^b v(t)dt \approx 0{,}5[v(a) + v(b)]$$

Hierbei bezeichnen $v$ die Geschwindigkeit und $\Delta x$ den räumlichen Abstand zwischen zwei Aktualisierungszeitpunkten $a$ und $b$. Werden als zu erkennende Objekte unterbrochene Fahrspurmarkierungen herangezogen, liegen die zeitlichen Helligkeitssignale ebenso wie die räumlichen Helligkeitssignale als Rechtecksignale vor.

Es wird dann in den Schritten S8 und S9 eine Autokorrelation durchgeführt, um die räumlichen Helligkeitssignale von jeweils zwei verschiedenen Abtastlinien 22 miteinander zu vergleichen und auf diese Weise die zurückgelegte Strecke eines Objekts zu ermitteln, das sich zu verschiedenen Zeitpunkten $t$ an den Abtastlinien 22 befindet. Hierfür wird in Schritt S8 die Matrix der Autokorrelationsfunktionen aktualisiert und in Schritt S9 eine Maximalstellensuche durchgeführt. Anhand der gefundenen Maximalstellen kann selbst bei verrauschten Helligkeitssignalen diejenige Strecke in Weltkoordinaten berechnet werden, welche von einem Objekt, also z. B. einer Markierungskante, das die Messpositionen im Bild nacheinander passiert, zurückgelegt wird.

Die so berechneten Streckenlängen für alle Messstrecken 20 werden in Schritt S10 gefiltert und aktualisiert. Anschließend wird in Schritt S11 die Berechnung der Montagehöhe durchgeführt, gegebenenfalls unter weiterer Filterung. Der vorläufige Wert der Montagehöhe wird hierbei anhand eines Vergleichs der definierten Streckenlängen mit den jeweils berechneten Streckenlängen angepasst, um den tatsächlichen Wert der Montagehöhe zu bestimmen. Speziell wird unter Berücksichtigung des Strahlensatzes der tatsächliche Wert der Montagehöhe durch eine Multiplikation des vorläufigen Werts der Montagehöhe mit dem Verhältnis aus einer definierten Streckenlänge und der zugehörigen berechneten Streckenlänge der Messstrecke 20 bestimmt.

Anschließend wird in Schritt S12 geprüft, ob ein geschätzter Fehler des tatsächlichen Werts der Montagehöhe einen vorgegebenen Fehler-Schwellenwert unterschreitet. Wenn dies nicht der Fall ist, springt das Verfahren zurück zu der Hauptschleife S4. Wenn der geschätzte Fehler des tatsächlichen Werts der Montagehöhe jedoch den vorgegebenen Fehler-Schwellenwert unterschreitet, wird die Kamera 16 unter Verwendung des tatsächlichen Werts der Montagehöhe kalibriert und das Verfahren endet bei Schritt S14.

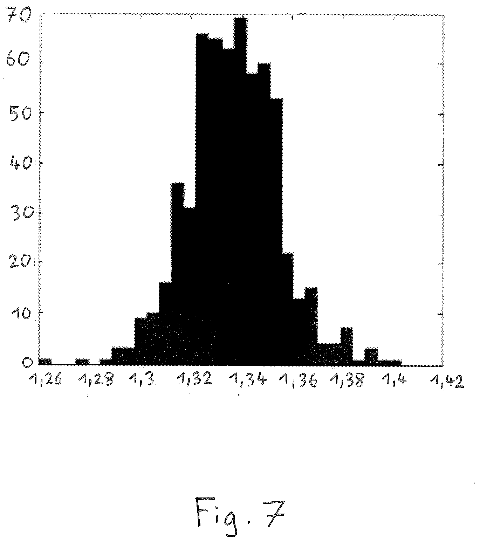

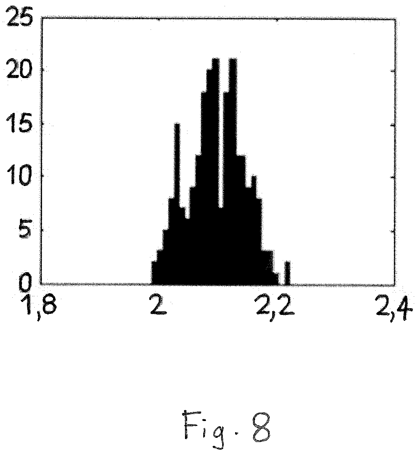

In den Fig. 7 und 8 sind die Ergebnisse zweier unter verschiedenen Bedingungen durchgeführter Tests des erfindungsgemäßen Kalibrierungsverfahrens dargestellt.

Die Testläufe wurden jeweils auf einem Computer unter Verwendung von aufgezeichneten Bildsequenzen durchgeführt. Die in Fig. 7 dargestellten Ergebnisse beziehen sich auf eine Kamera 16, die an einem Personenkraftwagen angebracht ist. Es wurden 1000 Testläufe mit unterschiedlichen vorläufigen Werten für die Montagehöhe durchgeführt. Die tatsächliche Montagehöhe der Kamera 16 betrug 1,33 m. Der vorgegebene vorläufige Wert für die Montagehöhe wurde in zufälliger Weise in einem Bereich von $\pm 0{,}3$ m um den tatsächlichen Wert definiert. Der Mittelwert der 1000 Testläufe betrug 1,337 m bei einer Standardabweichung 0,017 m.

Die in Fig. 8 dargestellten Ergebnisse beziehen sich auf eine Kamera 16, die an einem Lastwagen 11, 11' angebracht ist. Bei diesem Test betrug die tatsächliche Montagehöhe 2,10 m. Wiederum war der Bereich zufällig erzeugter Abweichungen $\pm 0{,}3$ m. Der Mittelwert der 300 Testläufe betrug 2,098 m bei einer Standardabweichung von 0,048 m.

Die Testergebnisse zeigen, dass mittels des erfindungsgemäßen Verfahrens ein zuverlässiges Schätzen der tatsächlichen Montagehöhe einer an einem Kraftfahrzeug angeordneten Kamera 16 ausgehend von einem "vernünftigen" vorläufigen Wert der Montagehöhe möglich ist. Somit kann eine Kamera 16 online kalibriert werden, auch wenn die tatsächliche Montagehöhe nicht bekannt ist. Das Verfahren eignet sich insbesondere für Kamerakalibrierungen bei Fahrerassistenzsystemen für Lastwagen 11, 11', da bei diesen mit relativ ausgeprägten typabhängigen Schwankungen der tatsächlichen Montagehöhe zu rechnen ist. Das Verfahren ist jedoch grundsätzlich auch für Fahrerassistenzsysteme geeignet, die bei Personenkraftwagen oder Motorrädern eingesetzt werden.

**Bezugszeichenliste**

| 11, 11' | Lastwagen |
| 13 | Fahrgestell |
| 15, 15' | Führerhaus |
| 16 | Kamera |
| 17 | Fahrbahnebene |
| 18 | Ursprung des Lochkameramodells |
| 19 | Bildebene |
| 20 | Messstrecke |
| 22 | Abtastlinie |

F    Fahrtrichtung

**Patentansprüche**

1. Verfahren zum Kalibrieren einer Bilderfassungseinrichtung (16), die in einer Montagehöhe über der Fahrbahnebene (17) an einem Kraftfahrzeug (11, 11') angeordnet ist und in der Lage ist, in zeitlichen Abständen Bilder einer Umgebung des Kraftfahrzeugs (11, 11') zu erfassen, wobei

   (i) ein vorläufiger Wert der Montagehöhe angenommen wird,
   (ii) wenigstens eine in der Fahrbahnebene (17) liegende Messstrecke (20) mit einer definierten Streckenlänge definiert wird,
   (iii) die Messstrecke (20) mittels einer perspektivischen Projektion unter Verwendung des vorläufigen Werts der Montagehöhe in die Bildebene (19) der Bilderfassungseinrichtung (16) projiziert wird, um zwei Messpositionen (22) im Bild zu ermitteln, die einem Streckenanfang und einem Streckenende der Messstrecke (20) entsprechen,
   (iv) mittels eines Bildverarbeitungssystems in nacheinander erfassten Bildern wenigstens ein Objekt identifiziert wird, das sich zu verschiedenen Zeitpunkten an den zwei Messpositionen (22) befindet,
   (v) aus der Zeitdifferenz zwischen den verschiedenen Zeitpunkten und der aktuellen Geschwindigkeit des Kraftfahrzeugs (11, 11') eine berechnete Streckenlänge der Messstrecke (20) ermittelt wird,
   (vi) anhand eines Vergleichs der definierten Streckenlänge mit der berechneten Streckenlänge ein tatsächlicher Wert der Montagehöhe aus dem vorläufigen Wert der Montagehöhe ermittelt wird, und
   (vii) die Bilderfassungseinrichtung (16) unter Verwendung des tatsächlichen Werts der Montagehöhe kalibriert wird.

2. Verfahren nach Anspruch 1,
   **dadurch gekennzeichnet, dass**
   in Schritt (vi) der tatsächliche Wert der Montagehöhe durch eine Multiplikation des vorläufigen Werts der Montagehöhe mit dem Verhältnis aus der definierten Streckenlänge und der berechneten Streckenlänge der Messstrecke bestimmt wird.

3. Verfahren nach Anspruch 1 oder 2,
   **dadurch gekennzeichnet, dass**
   in Schritt (iii) das Projizieren der definierten Messstrecke (20) in die Bildebene (19) der Bilderfassungseinrichtung (16) mittels eines "inverse perspective mapping"-Algorithmus durchgeführt wird.

4. Verfahren nach einem der vorstehenden Ansprüche,
   **dadurch gekennzeichnet, dass**
   in Schritt (ii) eine Messstrecke (20) definiert wird, die sich zumindest im Wesentlichen parallel zu einer Fahrtrichtung (F) des Kraftfahrzeugs (11, 11') erstreckt.

5. Verfahren nach einem der vorstehenden Ansprüche,
   **dadurch gekennzeichnet, dass**
   in Schritt (iii) als Messpositionen Abtastlinien (22) ermittelt werden, die sich durch das gesamte Bild hindurch erstrecken, und dass in Schritt (iv) das Identifizieren wenigstens eines Objekts jeweils das Anwenden eines Objekterkennungskriteriums auf alle einer Abtastlinie (22) zugeordneten Bildpunkte umfasst.

6. Verfahren nach einem der vorstehenden Ansprüche,

7

**dadurch gekennzeichnet, dass**
zum Identifizieren eines Objekts an einer Messposition (22) in Schritt (iv) geprüft wird, ob an der betreffenden Messposition bei Betrachtung mehrerer nacheinander erfasster Bilder ein Helligkeitssprung auftritt.

7.  Verfahren nach einem der vorstehenden Ansprüche,
    **dadurch gekennzeichnet, dass**
    das Identifizieren eines Objekts an einer Messposition (22) in Schritt (iv) anhand eines Ausgabesignals eines der Bilderfassungseinrichtung (16) zugeordneten separaten Objekterkennungssystems durchgeführt wird.

8.  Verfahren nach einem der vorstehenden Ansprüche,
    **dadurch gekennzeichnet, dass**
    in Schritt (iv) eine vordere und/oder eine hintere Markierungskante einer unterbrochenen Fahrspurmarkierung identifiziert wird.

9.  Verfahren nach einem der vorstehenden Ansprüche,
    **dadurch gekennzeichnet, dass**
    für jede der ermittelten Messpositionen (22) unter Verwendung einer Reihe von aufeinanderfolgend erfassten Bildern ein zeitliches Helligkeitssignal gebildet und durch eine Koordinatentransformation in ein räumliches Helligkeitssignal umgewandelt wird.

10. Verfahren nach Anspruch 9,
    **dadurch gekennzeichnet, dass**
    die räumlichen Helligkeitssignale der zwei Messpositionen (22) mittels Autokorrelation miteinander verglichen werden, um den räumlichen Abstand zwischen korrespondierenden Stellen der zwei räumlichen Helligkeitssignale als berechnete Streckenlänge der Messstrecke (20) zu bestimmen.

11. Verfahren nach einem der vorstehenden Ansprüche,
    **dadurch gekennzeichnet, dass**
    in Schritt (ii) mehrere Messstrecken (20) definiert werden, wobei in Schritt (v) für alle Messstrecken (20) jeweilige berechnete Streckenlängen ermittelt werden.

12. Verfahren nach einem der vorstehenden Ansprüche,
    **dadurch gekennzeichnet, dass**
    der vorläufige Wert der Montagehöhe anhand von A-priori-Informationen vorgegeben wird.

13. Verfahren nach einem der vorstehenden Ansprüche,
    **dadurch gekennzeichnet, dass**
    das Kalibrieren der Bilderfassungseinrichtung (16) in Schritt (vii) erst dann durchgeführt wird, wenn die aktuelle Geschwindigkeit des Kraftfahrzeugs (11, 11') einen Schwellenwert überschreitet und/oder die aktuelle Gierrate des Kraftfahrzeugs (11, 11') einen Schwellenwert unterschreitet und/oder ein geschätzter Fehler des tatsächlichen Werts der Montagehöhe einen vorgegebenen Fehler-Schwellenwert unterschreitet.

14. Vorrichtung zum Erkennen und Verfolgen eines Objekts von einem Kraftfahrzeug (11, 11') aus, mit einer Bilderfassungseinrichtung (16), welche in einer vorgegebenen Montagehöhe über der Fahrbahnebene (17) an dem Kraftfahrzeug (11, 11') angeordnet ist und welche zum Aufnehmen von Bildern der Fahrzeugumgebung in zeitlichen Abständen ausgebildet ist, und mit einem Bildverarbeitungssystem, das zum Durchführen eines Verfahrens nach einem der vorstehenden Ansprüche ausgebildet ist.

15. Computerprogrammprodukt, das Programmanweisungen enthält, die ein Verfahren nach einem der Ansprüche 1 bis 13 ausführen, wenn das Computerprogramm auf einem Computer ausgeführt wird.

**Claims**

1.  Method for calibrating an image capturing device (16) which is arranged on a motor vehicle (11, 11') at mounting height above the road surface (17) and which is capable of capturing images of an environment of the motor vehicle (11, 11') at time intervals, wherein

(i) a provisional value is assumed for the mounting height,

(ii) at least one measurement path (20) in the road surface (17) is defined with a defined path length,

(iii) the measurement path (20) is projected onto the image plane (19) of the image capturing device (16) by means of a perspective projection using the provisional value of the mounting height to determine two measurement positions (22) in the image that correspond to a path start and a path end of the measurement path (20),

(iv) at least one object is identified at the two measurement positions (22) at different times in successive captured images by means of an image processing system,

(v) a calculated path length of the measurement path (20) is determined from the time difference between the different times and the current speed of the motor vehicle (11, 11'),

(vi) an actual value of the mounting height is determined from the provisional value of the mounting height based on a comparison of the defined path length with the calculated path length, and

(vii) the image capturing device (16) is calibrated using the actual value of the mounting height.

**2.** Method according to claim 1,
**characterized in that**
in step (vi), the actual value of the mounting height is determined by a multiplication of the provisional value of the mounting height with the ratio of the defined path length and the calculated path length of the measurement path.

**3.** Method according to claim 1 or 2,
**characterized in that**
in step (iii), the projection of the defined measurement path (20) onto the image plane (19) of the image capturing device (16) is carried out by means of an "inverse perspective mapping" algorithm.

**4.** Method according to one of the preceding claims,
**characterized in that**
in step (ii), a measurement path (20) is defined which extends at least substantially in parallel to a direction of travel (F) of the motor vehicle (11, 11').

**5.** Method according to one of the preceding claims,
**characterized in that**
in step (iii), scanning lines (22) are determined as measurement positions which extend through the entire image, and that in step (iv), the identification of at least one object comprises the respective application of an object recognition criterion to all image points associated with a scanning line (22).

**6.** Method according to one of the preceding claims,
**characterized in that**
for the identification of an object at a measurement position (22) in step (iv) it is checked whether a brightness step occurs at the respective measurement position when viewing a plurality of successively captured images.

**7.** Method according to one of the preceding claims,
**characterized in that**
the identification of an object at a measurement position (22) in step (iv) is carried out using an output signal of a separate object recognition system associated with the image capturing device (16).

**8.** Method according to one of the preceding claims,
**characterized in that**
in step (iv), a front and/or a rear marking edge of a discontinuous lane marking is identified.

**9.** Method according to one of the preceding claims,
**characterized in that**
a temporal brightness signal is formed for each of the determined measurement positions (22) using a series of successively captured images and is transformed by coordinate transformation into a spatial brightness signal.

**10.** Method according to Claim 9,
**characterized in that**
the spatial brightness signals of the two measurement positions (22) are compared with one another by means of autocorrelation to determine the spatial distance between corresponding positions of the two spatial brightness signals as a calculated path length of the measurement path (20).

**11.** Method according to one of the preceding claims,
**characterized in that**
in step (ii), a plurality of measurement paths (20) is defined, wherein in step (v) respective calculated path lengths are determined for all measurement paths (20).

**12.** Method according to one of the preceding claims,
**characterized in that**
the provisional value of the mounting height is predefined based on a-priori information.

**13.** Method according to one of the preceding claims,
**characterized in that**
the calibration of the image capturing device (16) is only carried out in step (vii) when the current speed of the motor vehicle (11, 11') exceeds a threshold and/or the current yaw rate of the motor vehicle (11, 11') falls below a threshold and/or an estimated error of the actual value of the mounting height falls below a predefined error threshold.

**14.** Apparatus for detecting and tracking an object from a motor vehicle (11, 11'), having an image capturing device (16) which is arranged at the motor vehicle (11, 11') at a predetermined mounting height above the road surface (17) and which is capable of capturing images of the environment of the motor vehicle at time intervals, and having an image processing system, which is adapted for carrying out a method according to one of the preceding claims.

**15.** Computer program product including program instructions for performing a method according to one of claims 1 to 13 when the computer program is run on a computer.

**Revendications**

**1.** Procédé de calibrage d'un dispositif d'acquisition d'image (16) qui est agencé sur un véhicule automobile (11, 11') à une hauteur de montage au-dessus du plan de la chaussée (17) et qui est capable d'acquérir des images d'un environnement du véhicule automobile (11, 11') à des intervalles temporels, dans lequel

(i) on suppose une valeur provisoire de la hauteur de montage,
(ii) on définit au moins un trajet de mesure (20) d'une longueur de trajet définie dans le plan de la chaussée (17),
(iii) le trajet de mesure (20) est projeté dans le plan d'image (19) du dispositif d'acquisition d'image (16) au moyen d'une projection en perspective en utilisant la valeur provisoire de la hauteur de montage, afin de déterminer deux positions de mesure (22) dans l'image qui correspondent à un début de trajet et à une fin de trajet du trajet de mesure (20),
(iv) on identifie au moins un objet dans des images acquises successivement au moyen d'un système de traitement d'image qui se trouve aux deux positions de mesure (22) à des instants différents,
(v) à partir de la différence de temps entre les instants différents et de la vitesse actuelle du véhicule automobile (11, 11'), on détermine une longueur de trajet calculée du trajet de mesure (20),
(vi) en se basant sur une comparaison de la longueur de trajet définie avec la longueur de trajet calculée, on détermine une valeur réelle de la hauteur de montage à partir de la valeur provisoire de la hauteur de montage, et
(vii) on calibre le dispositif d'acquisition d'image (16) en utilisant la valeur réelle de la hauteur de montage.

**2.** Procédé selon la revendication 1,
**caractérisé en ce que**
dans l'étape (vi), on définit la valeur réelle de la hauteur de montage par une multiplication de la valeur provisoire de la hauteur de montage avec le rapport de la longueur définie sur la longueur calculée du trajet de mesure.

**3.** Procédé selon la revendication 1 ou 2,
**caractérisé en ce que**
dans l'étape (iii), on effectue la projection du trajet de mesure défini (20) dans le plan d'image (19) du dispositif d'acquisition d'image (16) au moyen d'un algorithme dit "inverse perspective mapping" (cartographie en perspective inverse).

**4.** Procédé selon l'une des revendications précédentes,
**caractérisé en ce que**
dans l'étape (ii), on définit un trajet de mesure (20) qui s'étend au moins sensiblement parallèlement à une direction de circulation (F) du véhicule automobile (11, 11').

5. Procédé selon l'une des revendications précédentes,
   **caractérisé en ce que**
   dans l'étape (iii), on détermine à titre de positions de mesure des lignes de balayage (22) qui s'étendent à travers toute l'image, et **en ce que** dans l'étape (iv), l'identification d'au moins un objet inclut l'application d'un critère de reconnaissance d'objet sur tous les points d'image associés à une ligne de balayage (22).

6. Procédé selon l'une des revendications précédentes,
   **caractérisé en ce que**
   pour l'identification d'un objet à une position de mesure (22), on vérifie dans l'étape (iv) si à la position de mesure concernée, il se produit un saut de luminosité en observant plusieurs images acquises successivement.

7. Procédé selon l'une des revendications précédentes,
   **caractérisé en ce que**
   l'identification d'un objet à une position de mesure (22) est mise en oeuvre dans l'étape (iv) en se basant sur un signal de sortie d'un système de reconnaissance d'objet séparé associé au dispositif d'acquisition d'image (16).

8. Procédé selon l'une des revendications précédentes,
   **caractérisé en ce que**
   dans l'étape (iv), on identifie une arête de marquage avant et/ou arrière d'un marquage interrompu de voie de circulation.

9. Procédé selon l'une des revendications précédentes,
   **caractérisé en ce que**
   pour chacune des positions de mesure déterminées (22), on forme un signal de luminosité temporel en utilisant une série d'images acquises successivement et on le convertit en un signal de luminosité spatial par une transformation de coordonnées.

10. Procédé selon la revendication 9,
    **caractérisé en ce que**
    on compare les signaux de luminosité spatiaux des deux positions de mesure (22) l'un à l'autre par auto-corrélation, afin de définir la distance spatiale entre des emplacements correspondants des deux signaux de luminosité spatiaux à titre de longueur calculée du trajet de mesure (20).

11. Procédé selon l'une des revendications précédentes,
    **caractérisé en ce que**
    dans l'étape (ii), on définit plusieurs trajets de mesure (20), et dans l'étape (v), on détermine les longueurs calculées respectives pour tous les trajets de mesure (20).

12. Procédé selon l'une des revendications précédentes,
    **caractérisé en ce que**
    on impose la valeur provisoire de la hauteur de montage en se basant sur des informations à priori.

13. Procédé selon l'une des revendications précédentes,
    **caractérisé en ce que**
    l'on n'effectue le calibrage du dispositif d'acquisition d'image (16) dans l'étape (vii) que lorsque la vitesse actuelle du véhicule automobile (11, 11') dépasse une valeur seuil et/ou le taux de lacet actuel du véhicule automobile (11, 11') passe au-dessous d'une valeur seuil et/ou une erreur estimée de la valeur réelle de la hauteur de montage passe au-dessous d'une valeur seuil d'erreur donnée.

14. Dispositif de reconnaissance et de suivi d'un objet à partir d'un véhicule automobile (11, 11'), comportant un dispositif d'acquisition d'image (16) qui est agencé sur le véhicule automobile (11, 11') à une hauteur de montage donnée au-dessus du plan de la chaussée (17) et qui est capable d'acquérir des images d'un environnement du véhicule à des intervalles temporels, et comportant un système de traitement d'image qui est réalisé pour mettre en oeuvre un procédé selon l'une des revendications précédentes.

15. Produit de programme informatique, qui contient des instructions de programme mettant en oeuvre un procédé selon l'une des revendications 1 à 13 lorsque le programme informatique est exécuté sur un ordinateur.

Fig. 1

Fig. 2

Fig. 3

EP 3 046 076 B1

START — S1

GEBE VORLÄUFIGEN WERT DER
MONTAGEHÖHE VOR — S2

DEFINIERE VERMESSUNGSSTRECKE
UND PROJIZIERE DIESE IN DIE BILDEBENE,
UM ABTASTLINIEN ZU POSITIONIEREN — S3

HAUPT-
SCHLEIFE — S4

Fig. 4

Fig. 5

17

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2704096 A1
- US 8269833 B2

- WO 2014021421 A1

**In der Beschreibung aufgeführte Nicht-Patentliteratur**

- Automatic on-the-fly extrinsic camera calibration of onboard vehicular cameras. *EXPERT SYSTEMS WITH APPLICATIONS,* vol. 41 (4), ISSN ISSN:0957-4174, 1997-2007

- **MALLOT et al.** Inverse Perspective Mapping Simplifies Optical Flow Computation and Obstacle Detection. *Biological Cybernetics,* 1991, vol. 64, 177-185